Europäisches Patentamt

European Patent Office

Office européen des brevets

(11) Publication number: **0 223 562 B1**

(12) EUROPEAN PATENT SPECIFICATION

(19)

(45) Date of publication of patent specification: **27.05.92**    (51) Int. Cl.⁵: **C09J 5/06, //A43D25/00**

(21) Application number: **86308850.6**

(22) Date of filing: **13.11.86**

(54) Attaching soles to shoes.

(30) Priority: **14.11.85 GB 8528113**
   **20.06.86 GB 8615062**

(43) Date of publication of application:
   **27.05.87 Bulletin  87/22**

(45) Publication of the grant of the patent:
   **27.05.92 Bulletin  92/22**

(84) Designated Contracting States:
   **DE ES FR GB IT**

(56) References cited:
   **EP-A- 0 005 781**
   **FR-A- 2 448 564**
   **GB-A- 2 137 638**

(73) Proprietor: **BOSTIK LIMITED**
   **Ulverscroft Works Ulverscroft Road**
   **Leicester LE4 6BW(GB)**

(84) Designated Contracting States:
   **GB**

(73) Proprietor: **BOSTIK FRANCE SA**
   **12 rue Truillot**
   **F-94203 Ivry-sur-Seine(FR)**

(84) Designated Contracting States:
   **ES FR**

(73) Proprietor: **Bostik GmbH**
   **Gattenhöferweg 36**
   **W-6370 Oberursel(DE)**

(84) Designated Contracting States:
   **DE IT**

(72) Inventor: **Hanson, Raymond**
   **20 Church Leys Avenue**
   **Rearsby Leicester LE7 8YF(GB)**
   Inventor: **Allen, Christopher Maclaren**
   **138, Balmoral Road**
   **Mountsorrel Loughborough(GB)**
   Inventor: **Albert, Karl-Heinz**
   **Friedrichstrasse 22**
   **W-6370 Oberursel T/S 4(DE)**
   Inventor: **Von Voithenberg, Hubertus**
   **Kaiser-Friedrich-Promenade 76**
   **W-6380 Bad Homburg(DE)**

(74) Representative: **Dubost, Thierry Pierre**
   **Cray Valley SA, BP 22**
   **F-60550 Verneuil en Halatte(FR)**

## Description

The present invention relates to the attaching of soles to shoes using moisture-curable melt-adhesives.

So-called "two-way cementing systems" are well known in the shoe industry in which adhesive is applied to the contact surface of a sole and to the contact surface of a shoe bottom and creating a bond by bringing the contact surfaces of sole and of shoe bottom together under pressure.

The efficiency of such processes may be measured both in the performance of the product (the shoe) and in the demands of time, cost, space, safety etc of the manufacturing operation.

Neoprene-based adhesives provided satisfactory results with two-way cementing systems but, being solvent-based, present new problems related to solvent removal, including general environmental disadvantages and undesirable working conditions.

Polyurethane-based adhesives when used initially, although inherently compatible with a wider range of materials, were still solvent-based but with somewhat reduced levels of solvent-removal difficulties.

Outsoles may be attached to shoe bottoms using a moisture-curable solvent-free adhesive, by the steps of (i) preparing the contact surface of the outsole for the application of adhesive and applying adhesive thereto, (ii) preparing the contact surface of the shoe bottom for the application of adhesive and applying adhesive thereto, and (iii), after a time delay, bringing the two contact surfaces together and applying pressure thereto to cause them to be bonded.

One such method is disclosed in GB-A 1540634. More particularly, this specification discloses a method of bonding a shoe sole to a shoe upper using selected urethane prepolymer compositions which are provided as fluid compositions and which are convertible, by a chain extension treatment (curing), to a polyurethane which, when heated, is tacky and capable of establishing a substantially immediate strong adhesive union with a compatible adhesive or resin surface. The curing of the composition preferably takes place by the application of heat and moisture. More recently, furthermore, an adhesive suitable for use in carrying out such a method, and identified as "BOSTIK" PA 5102 ("BOSTIK" is a Registered Trade Mark), has become available. In carrying out such method, however, after the adhesive has been applied to the contact surface of the shoe bottom and, if desired, also the contact surface of the outsole, curing takes place under defined conditions of heat and moisture and thereafter, prior to bringing the surfaces into contact with one another, the surfaces are heat-activated for a period of about 30 seconds.

Apart from the requirement for additional apparatus to carry out a method involving heat activation, and indeed the extra space requirements for such apparatus, the need to heat-activate also requires additional handling of the various components, and consequently more manpower, as well as additional time for the process as a whole.

In UK patent specification GB 2 137 638 is described and claimed a so-called solvent-free adhesive which is a moisture-curable composition comprising polyurethane pre-polymers and its use in bonding a sole to a shoe upper is also claimed.

The method of GB 2 137 638 for bonding a sole to a shoe upper comprises the steps of providing on attaching surfaces of one or both of the sole and shoe upper a layer of adhesive composition, exposing each layer of adhesive composition to air-borne moisture to bring chain extension of the polyurethane, heating the layer or at least one of the layers of the adhesive composition to bring it to tacky adhesive condition, pressing the attaching surfaces of the sole and upper together with the composition between them and bringing about cooling of the composition to form an adhesive bond between the sole and the shoe upper. That is to say, this process requires a step of heating at least one layer of adhesive to bring it to tacky adhesive condition (activation) before pressing sole and upper together to form an adhesive bond.

The adhesive on the contact surface of the outsole is allowed to cure in ambient atmospheric conditions for a period of about 15 hours, while the adhesive applied to the contact surface of the shoe bottom is cured in a substantially enclosed chamber having a radiant heater, the heater surface of which is of the order of 350°C, for a period of some 20 seconds, during 9 seconds of which period steam is introduced into the chamber. Thereafter the shoe bottom is allowed to cool.

Prior to bringing the two contact surfaces together, the sole is heated for five seconds using a heater having a temperature of 85 to 95°C. There is no activation of the adhesive on the shoe bottom other than by contact with the warmed outsole. Having spotted the two contact surfaces together, the shoe with the spotted outsole operates in a sole bonding press.

It will be appreciated that also using this method, significant storage problems arise not only with the outsole, but also with the shoes during their cooling. Furthermore, leaving the shoes to cool requires two handling operations, viz. removing them from the curing chamber into storage and then removing them from storage for spotting, which again requires additional time for the process as a whole and more manpower.

It is thus the object of the present invention to provide an improved method of attaching an outsole to a shoe bottom, in carrying out which a more streamlined production flow can be achieved with a minimum manpower requirement.

It is a further object of the present invention to provide an improved method of bonding a sole to a shoe using a moisture-curable melt adhesive.

According to the present invention, we provide a method of attaching a sole to a shoe in which a moisture-curable melt adhesive is applied to either the sole and/or shoe upper, the adhesive coating is subjected to a hot-cure step with air-borne moisture, and the sole and shoe upper are pressed together with the adhesive between them, characterised in that the pressing takes place immediately after the hot-cure step, preferably in less than 90 seconds after leaving the hot-cure.

The sole and/or shoe upper may be subjected to pre-treatment, e.g. by roughing, before the moisture-curable adhesive is applied.

In the case of certain sole materials, such as PVC, thermoplastic rubber or polyurethane, it may be possible to effect the bond without application of the moisture-curable adhesive to the sole, but merely to pretreat the soles e.g. by wiping with solvent or primer solution in the way known for polyurethane adhesive. Preferably the soles are spotted (brought together for bonding) in less than 60 seconds after the uppers leave the hot-cure.

The elimination of the separate activation (heating) step in the method of the present invention gives rise to significant economies in time, labour and energy and often also to reduction in quantity of adhesive used. However, in some circumstances it may be necessary to subject a component (sole or shoe) not coated with moisture-curable adhesive to a brief heat treatment.

In some shoe factories it is the practice to coat soles at least one day before they are used. The coating may be a moisture-curable polyurethane, which can cure slowly in ambient temperature and humidity conditions, and this cure can be initiated by the brief application of heat after application of the polyurethane adhesive composition followed by slow cure in ambient conditions. In order that the sole should not unduly chill the shoe upper leaving the hot-cure the stored (and thus-cooled) sole may be heated prior to bringing the contact surfaces of sole and shoe upper together.

Alternatively, the sole may be coated with a moisture-curable adhesive and subjected to a hot-cure step with air-borne moisture before being pressed with the shoe upper which has been subjected to a similar hot-cure step.

Preferably the moisture-curable adhesive is applied to sole or shoe upper as a thin film of 0.1 - 0.3mm. In applying the adhesive, adequate heat must be present to ensure adequate "wet-out" of the adhesive and it is sometimes necessary to supply heat for this purpose. Although delays of up to 30 minutes or even one hour can be tolerated, the hot-cure step usually follows immediately after application of the adhesive. The temperature of the hot-cure step must be higher than the crystalline melting point of the adhesive, usually 70°-120°C, preferably 100°-110°C. The hot-cure is carried out in a substantially enclosed chamber with 10-70%, preferably less than 30% relative humidity. However, the humidity used is partially dictated by the nature of the materials used; for example, with many commonly-used leathers a dew-point of 60°C should not be exceeded if water staining is to be avoided. The hot-cure step may last from 10 seconds to 5 minutes, but preferably 30 to 120 seconds.

A fast-curing, hot-melt composition is usually applied to shoe uppers. It may in some cases be advantageous to cool the adhesive somewhat after the hot-cure step but the temperature should not be allowed to drop below the crystalline melting point of the adhesive. The slow-curing hot-melt composition which may be applied to soles usually has a long activation time, like the adhesives described in UK specification GB 83 09 129. They will cure in ambient conditions of say 20° ± 5°C and 20 - 70% RH in periods up to 24 hours and may be reactivated after periods varying from 24 hours to 6 months. As explained above, the cure of the adhesive applied to the sole may be expedited by initial brief subjection to heat, for example by heating to a temperature of about 85°C for 4 to 6 seconds before cure under ambient conditions.

In one preferred method according to the invention, the applied adhesive is cured under conditions of controlled heat and moisture, at least the adhesive applied to the contact surface of the shoe bottom being cured in a substantially enclosed chamber, the air in which has a temperature of 95 ± 10°C and humidity of 40 to 60°C dew point, for a period of 2 ± 0.5 minutes and the time delay between the end of such period for curing the adhesive applied to the shoe bottom and the bringing together of the two contact surfaces is not more than 60 seconds.

It will thus be appreciated that, in carrying out the present invention, the step of heat activation at least of the adhesive applied to the contact surface of the shoe bottom is dispensed with. In this way, the manpower requirements are reduced thus making it possible for a single operator to take a shoe to which adhesive has been applied and load it into the curing chamber, unload it after curing and assemble it with a prepared outsole, and place the assembly in a sole bonding press.

In carrying out one method in accordance with the invention, the adhesive applied to the contact surface of the outsole is cured in ambient atmospheric conditions of heat and moisture for a period of not less than 12 hours. This enables the method to fit in with the practice current in some shoe factories whereby the outsoles are coated at least one day before they are to be used. It has been found that, using a moisture-curable adhesive, the moisture in the atmosphere is effective to cause the cure of the adhesive to take place, albeit at a slow rate, under ambient atmospheric conditions. It has been found desirable, under such circumstances, nevertheless to heat the adhesive applied to the contact surface of the outsole for a period of 4 to 6 seconds to a temperature of about 85°C prior to the coating being left to cure in ambient atmospheric conditions as aforesaid. This has been found to improve wetting out, and thus the final bond strength. Furthermore, where the curing of the adhesive applied to the contact surface of the outsole takes place as aforesaid, preferably said adhesive is warmed to a temperature not exceeding 60°C prior to the contact surfaces being brought together. In this way, the outsole is prevented from acting as a heat sink which would cause too rapid cooling of the adhesive applied to the contact surface of the shoe bottom.

In carrying out another method in accordance with the invention, on the other hand, the adhesive applied to the contact surface of the outsole is itself cured under the same conditions as the adhesive applied to the contact surface of the shoe bottom, namely in a substantially enclosed chamber, the air in which has a temperature of 95 ± 10°C and humidity of 40 to 60°C dew point, for a period of 2 ± 0.5 minutes. In this way, it is possible for the outsole and shoe bottom contact surfaces to be prepared and treated simultaneously, without the need for any storing of the outsoles overnight or for a longer period.

Where the applied adhesive is to be cured in a substantially enclosed chamber as aforesaid, it is desirable that the component to whose contact surface it is applied (that is in the case of said one method the shoe alone, and in the case of said other method both the shoe and the outsole) can be left in ambient atmospheric conditions for a period of between 5 and 30 minutes, preferably 10 minutes, prior to being placed in the chamber, thus enabling other shoe-making operations to be performed especially on the shoe bottom, e.g. the application of bottom filler (which conventionally is applied immediately prior to sole bonding, but in the present method cannot be so applied for time reasons). It will thus be appreciated that the adhesive used must be able to be left in such conditions for such a period without affecting its ability to be subsequently cured in the curing chamber or indeed without significantly affecting its final bond properties.

In carrying out this other method in accordance with the invention, in order to avoid the contact surface of the outsole being at a temperature which will in fact inhibit the bonding process (in that it provides additional heat for the adhesive, as opposed to a heat sink when it is too cold), the adhesive applied to the outsole contact surface is preferably cooled for a period of about 30 seconds at room temperature prior to bringing the two contact surfaces together as aforesaid.

Whereas the optimum humidity within the substantially enclosed chamber will vary according to the particular components being treated, a preferred range for the humidity is 52° to 54°C dew point. Similarly, the preferred time delay between the end of the period for curing the adhesive applied to the shoe bottom and the bringing together of the two contact surfaces is up to 45 seconds.

In order that the invention can be better understood, preferred embodiments will now be described in greater detail by way of example.

EXAMPLE 1:

The contact surface of a PVC outsole (i.e. the surface which is to be attached to the corresponding surface of the shoe bottom) is primed by means of a solvent wash and thereafter a moisture-curable solvent-free adhesive is applied, in a band of about 2.5 cms width, at a temperature of 100 to 105°C and in a thin film (.1mm thick), along the whole of the margin of the contact surface. The outsole with the applied adhesive is then placed in a heater for a period of 4 to 6 seconds, to bring the surface temperature to about 85°C. One suitable heater for this purpose is described in EP-A 92320. Following such heating, the outsole is stored at least overnight to allow curing of the applied adhesive to take place.

The shoe to which an outsole treated as aforesaid is to be bonded has a leather upper which has been lasted. Marginal portions of the contact surface of the shoe bottom are subjected to a conventional roughing operation, e.g. using a machine as described in EP-A 43645, and thereafter a film of a moisture-curable solvent-free adhesive is applied in a band, again at a temperature of 100 to 105°C, to the roughened region, using an applicator device as disclosed in GB-A 2098884, the film thickness being of the order of .1 mm and the film band width about 2.5 cms.

Following the application of the adhesive, the shoe is then passed to a bottom filling station at which filler is applied as appropriate and thereafter the shoe is passed to the curing station. Preferably the time between the application of adhesive and arrival at the curing station is of the order of 10 minutes. The operator at the curing station then places the shoe in a curing apparatus, details of construction of which are set out in International Application No. PCT/GB 85/00379. More particularly, this apparatus has a chamber through which the shoe is moved progressively during a cure period of 2 minutes, the air temperature within the chamber being in the range 95 to 100°C and the humidity in the range 52 to 54°C dew point.

While the adhesive applied to the contact surface of the shoe bottom is being cured in the chamber, the operator takes a prepared outsole to the contact surface of which adhesive has been applied as aforesaid, and places it in a heat activating apparatus, e.g. again as described in EP-A 92320, for a period of 6 seconds whereby the outsole is warmed to a surface temperature of about 60°C. The timing of the heat activation of the adhesive on the outsole is such that the sole is ready for "spotting" against the shoe bottom, when the latter is prepared.

At the end of the curing operation, the shoe is returned to an unloading position at which the operator at the curing station then removes the shoe and spots the outsole thereagainst, whereafter he loads the shoe with the "spotted" outsole thereon, into a shoe bonding press, e.g. of the type described in GB-A 2042868. The "open time", i.e. the time between the shoe leaving said chamber and the "spotting" of the outsole against the shoe bottom, is of the order of 30 to 45 seconds. The dwell time in the sole bonding press is of the order of 10 seconds.

From the foregoing, it will be apparent that the adhesive used, in addition to being moisture-curable and solvent-free, has the following characteristics:

(a) For application to the contact surface of the outsole, it is capable of a slow cure (viz. minimum of 12 hours) but with the possibility of being left for considerably longer periods (e.g. up to fourteen days) without thereby losing the capability for being re-activated;

(b) Again for application to the contact surface of the outsole, the cure, and also the final bond strength, is enhanced by the newly applied adhesive being first subjected to heat (up to 85°C) for a period of between 4 and 6 seconds;

(c) For application to the contact surface of the shoe bottom, the adhesive will cure, at least to the extent of giving a satisfactory green strength within a period of the order of 1 minute from the end of the cure, by being subjected to an enclosed atmosphere the air temperature of which is 95 ± 10°C and the humidity 52 to 54°C dew point, for a period of 2 ± 0.5 minutes;

(d) For application to the contact surface of the shoe bottom, the cure characteristics referred to at (c) above are not adversely affected if a period of the order of 10 minutes elapses between application and being placed in the curing chamber;

(e) For application to the contact surface of the shoe bottom, immediately following the cure, the adhesive has an open time of up to 45 seconds within which bonding can take place without the need for further re-activation.

An adhesive having characteristics (a) and (b) is BOSTIK 7802/7803 (RTM), while an adhesive having the characteristics of (c), (d), (e) is BOSTIK 9801 (RTM).

EXAMPLE 2:

In this case a generally similar method is followed as in the case of Example 1 above, except that in this case the outsole is made of resin rubber and the priming step is a conventional halogenation operation.

EXAMPLE 3:

The method followed is generally the same as in Example 1 above, except that the outsole is made of polyurethane and, by way of preparation, the marginal portions of the contact surface thereof are roughed mechanically. In general, prior to applying the adhesive, no primer will be required, although if desired a thin coating of adhesive which has been thinned may be applied over the roughed area.

EXAMPLE 4:

The method followed here is the same as in Example 3, except that the outsole is of leather.

EXAMPLE 5:

An outsole of PVC is solvent-washed as a priming operation and thereafter a coating of adhesive is applied to the contact surface thereof generally in the manner set out in Example 1. In this case, however, the adhesive is the same as for applying to the shoe bottom (which latter in this Example is treated in precisely the same way as in Example 1) and the outsole, with the applied adhesive, is then placed in the same curing apparatus (or a similar curing apparatus) as the shoe. In this case, therefore, there is no heating of the adhesive applied to the contact surface of the outsole immediately following the application, but the outsole may be held for a period of about 10 minutes following application, prior to being placed in the cure apparatus.

Following the cure of the two adhesive coatings, i.e. on the outsole and on the shoe bottom, a short period of up to 30 seconds is provided for allowing the adhesive applied to the contact surface of the outsole to cool. Thereafter spotting takes place and the combined outsole and shoe are placed in the sole bonding press.

EXAMPLE 6:

In this case a generally similar method is followed as in the case of Example 5 above, except that in this case the outsole is made of resin rubber and the priming step is a conventional halogenation operation.

EXAMPLE 7:

The method followed is generally the same as in Example 5 above, except that the outsole is made of polyurethane and, by way of preparation, the marginal portions of the contact surface thereof are roughed mechanically. In general, prior to applying the adhesive, no primer will be required, although if desired a thin coating of adhesive which has been thinned may be applied over the roughed area.

EXAMPLE 8:

The method followed here is the same as in Example 7, except that the outsole is of leather.

EXAMPLE 9: (Adhesive-coated soles and uppers)

Both sole and shoe upper of leather, subjected to a roughing treatment before application of a thin film (0.1 - 0.3mm) of a fast-curing hot-melt composition. The adhesive layers on both components were then subjected to a hot-cure by a $3\frac{1}{2}$ minute passage through a two-zone chamber with a humidity showing 60°C dew point; the first zone was 90°C and the second zone 110°C. Excellent tack was demonstrated on spotting and after pressing for 12 seconds green strength was shown by a peel strength of 14 N/cm measured 15 seconds after pressing. Matured bond strength after 5 days storage at 23°C/50% RH gave 163 N/cm (material failure).

EXAMPLE 10: (pre-cemented soles)

Thermoplastic rubber soles were primed with a 2% solution of UNIGRIP 300 (RTM) in acetone and dried. They were then coated with a thin (0.1 - 0.3mm) film of BOSTIK 7803 (RTM), a slow-curing hot-melt adhesive, and stored for 3 days under ambient conditions.

Leather shoe uppers were given a roughing treatment and then coated with a thin film of BOSTIK 9801 (RTM), a fast-curing hot-melt adhesive. These adhesive coatings were cured for 30 seconds in a rapid curer (distanced 8cm from a heating plate having a surface temperature of 360°C; the humidity showed a dew point of approx. 60°C.) Soles and shoe uppers were spotted immediately after leaving the rapid curer and pressed for 15 seconds. Peel strength of the bonds was measured as 13 N/cm 15 seconds after pressing and 19 N/cm 30 seconds after pressing. Double the pressing time to 30 seconds gave an initial peel strength of 31 N/cm 15 seconds after pressing and 46 N/cm 30 seconds after pressing.

The matured bond strength after 5 days storage at 23°C/50% RH gave 120 N/cm (material failure).

EXAMPLE 11 (Uncoated soles)

Thermoplastic rubber soles were primed with a 2% solution of UNIGRIP 300 (RTM) in acetone. Leather shoe uppers were roughed and then coated with a thin film (0.1 - 0.3mm) of a fast-curing hot-melt adhesive. The adhesive coating on the shoe uppers was cured for 30 seconds in a rapid curer (distanced 8cm from black heating plates with a surface temperature of 360°C; the humidity in the chamber of the rapid curer showing a dew point of approx. 60°C). The soles and shoe uppers were spotted immediately on leaving the curer and displayed excellent tack. After pressing for 15 seconds the initial peel strength was measured as 18 N/cm 15 seconds after pressing and 32 N/cm 30 seconds after pressing. The material bond strength after 5 days storage at 23°C/50% RH gave 110 N/cm (material failure TPR).

**Claims**

1. A method of attaching a sole to a shoe in which a moisture-curable melt adhesive is applied to either the sole and/or the shoe upper, the adhesive coating is subjected to a hot-cure step with air-borne moisture, and the sole and the shoe upper are pressed together with the adhesive between, characterised in that the hot-cure step takes place under conditions of controlled temperature and moisture, and the pressing step takes place immediately, preferably in less than 90 seconds, after the hot-cure step.

2. A method according to claim 1, wherein the sole and/or shoe upper is subjected to pre-treatment before the moisture-curable adhesive is applied.

3. A method according to claim 1 or 2, wherein no moisture-curable adhesive is applied to the sole which instead is merely pretreated by wiping with solvent or primer solution.

4. A method according to any one of the preceding claims, wherein pressing takes place less than 60 seconds after leaving the hot-cure.

5. A method according to claim 1 or 2, wherein only the sole or shoe upper is provided with a coating of moisture-curable adhesive, and the non-coated shoe upper or sole respectively is subjected to a brief heat treatment.

6. A method according to any one of claims 1,2 or 5, wherein a slow-curing moisture-curable polyurethane is applied to the sole at least one day before using and allowed to cure slowly in ambient temperature and humidity conditions.

7. A method according to claim 6, wherein the cure is initiated by the brief application of heat after application of the polyurethane adhesive composition followed by slow cure in ambient conditions.

8. A method according to claim 6 or 7, wherein the sole is heated prior to bringing in contact with the shoe upper so as to improve the "wet out" of the adhesive prior to bringing the contact surfaces of sole and of shoe upper together.

9. A method according to claim 1 using a moisture-curable solvent-free adhesive, comprising the steps of
   i) preparing the contact surface of the outsole for the application of adhesive and applying a layer of adhesive thereto,
   ii) preparing the contact surface of the shoe bottom for the application of adhesive and applying a layer of adhesive thereto, and
   iii), after a time delay, bringing the two contact surfaces together and applying pressure thereto to cause them to be bonded,
   characterised in that the applied adhesive is cured under conditions of heat and moisture, wherein at least the adhesive applied to the contact surface of the shoe bottom is cured in a substantially enclosed chamber, the air in which has a temperature of 95 ± 10°C and humidity of 40 to 60°C dew point, for a period of 2 ± 0.5 minutes,
   and in that the time delay between the end of such period for curing the adhesive applied to the shoe bottom and the bringing together of the two contact surfaces is not more than 60 seconds.

10. A method according to Claim 9 characterised in that the adhesive applied to the contact surface of the outsole is cured in ambient atmospheric conditions of heat and moisture for a period of not less than 12 hours.

11. A method according to Claim 10 characterised in that, following application, the adhesive applied to the contact surface of the outsole is heated for 4 to 6 seconds to a temperature of about 85°C prior to being cured in ambient atmospheric conditions as aforesaid.

12. A method according to claim 10 or 11 characterised in that prior to bringing the contact surfaces together the surface of the outsole is heated to a temperature not exceeding 60°C.

13. A method according to claim 9, 10, 11 or 12 characterised in that following the application of adhesive to the contact surface of the shoe bottom the shoe is left in ambient atmospheric conditions for a period of 5 to 30 minutes prior to being placed in said chamber.

14. A method according to Claim 9 characterised in that the adhesive applied to the contact surface of the outsole is also cured in a substantially enclosed chamber for a period of 2 ± 0.5 minutes.

15. A method according to Claim 14 characterised in that, following the application of adhesive as aforesaid, the shoe and the outsole are each left in ambient atmospheric conditions for a period of about 10 minutes prior to being placed in a substantially enclosed chamber as aforesaid.

16. A method according to Claim 15 characterised in that the adhesive applied to the outsole contact surface is cooled for a period of about 30 seconds at room temperature prior to bringing the two contact surfaces together as aforesaid.

17. A method according to any one of claims 9 to 16 characterised in that the humidity in said chamber is 52° to 54°C dew point.

18. A method according to any one of claims 9 to 17 characterised in that the time delay between the end of the period for curing the adhesive applied to the shoe bottom and the bringing together of the two contact surfaces is up to 45 seconds.

## Revendications

**1.** Procédé pour fixer une semelle à une chaussure, dans lequel on applique un adhésive fondu durcissable par l'humidité sur la semelle et/ou sur la tige de chaussure, on soumet le revêtement d'adhésif à une étape de thermodurcissement avec l'humidité de l'air et on presse la semelle et la tige de chaussure l'une contre l'autre, l'adhésif étant entre les deux, caractérisé en ce que l'étape de thermodurcissement a lieu dans des conditions régulées de température et d'humidité et en ce que l'étape de pressage a lieu immédiatement, de préférence moins de 90 secondes, après l'étape de thermodurcissement.

**2.** Procédé selon la revendication 1, dans lequel la semelle et/ou la tige de chaussure est soumise au prétraitement avant l'application de l'adhésif durcissable par l'humidité.

**3.** Procédé selon la revendication 1 ou 2, dans lequel on n'applique pas d'adhésif durcissable par l'humidité sur la semelle, mais au lieu de cela on la soumet à un simple prétraitement qui consiste à l'essuyer avec un solvant ou une solution de primaire.

**4.** Procédé selon l'une quelconque des revendications précédentes, dans lequel le pressage a lieu moins de 60 secondes après la sortie du thermodurcissement.

**5.** Procédé selon la revendication 1 ou 2, dans lequel seule la semelle ou la tige de chaussure est munie d'un revêtement d'adhésif durcissable par l'humidité, et la tige de chaussure, ou respectivement la semelle, non enduite est soumise à un bref traitement thermique.

**6.** Procédé selon l'une quelconque des revendications 1, 2 ou 5, dans lequel on applique un polyuréthanne durcissable par l'humidité à durcissement lent sur la semelle au moins une journée avant de l'utiliser et on le laisse durcir lentement dans des conditions ambiantes de température et d'humidité.

**7.** Procédé selon la revendication 6, dans lequel le durcissement est amorcé par une brève application de chaleur après l'application de la composition d'adhésif à base de polyuréthanne, suivie d'un durcissement lent dans des conditions ambiantes.

**8.** Procédé selon la revendication 6 ou 7, dans lequel la semelle est chauffée avant d'être amenée en contact avec la tige de chaussure, pour que le mouillage préalable de l'adhésif soit amélioré avant la mise en contact des surfaces de la semelle et de la tige de chaussure l'une contre l'autre.

**9.** Procédé selon la revendication 1, qui utilise un adhésif sans solvant durcissable par l'humidité, et qui comprend les étapes suivantes :
   i) préparation de la surface de contact de la semelle d'usure à l'application de l'adhésif et application sur celle-ci d'une couche d'adhésif,
   ii) préparation de la surface de contact du fond de chaussure à l'application de l'adhésif et application sur celle-ci d'une couche d'adhésif,
   iii) après un temps d'attente, mise en contact l'une contre l'autre des deux surfaces de contact et application d'une pression sur celles-ci pour les coller l'une sur l'autre,
caractérisé en ce que l'adhésif appliqué est durci dans des conditions de chaleur et d'humidité, dans lesquelles au moins l'adhésif appliqué sur la surface de contact du fond de chaussure est durci dans une enceinte essentiellement fermée, dans laquelle l'air a une température de 95 ± 10°C et une humidité de 40 à 60°C de point de rosée, pendant une période de 2 ± 0,5 minutes, et en ce que le temps d'attente entre la fin de cette période de durcissement de l'adhésif appliqué sur le fond de chaussure et la mise en contact des deux surfaces de contact l'une contre l'autre ne dépasse pas 60 secondes.

**10.** Procédé selon la revendication 9, caractérisé en ce que l'adhésif appliqué sur la surface de contact de la semelle d'usure est durci dans des conditions atmosphériques ambiantes de chaleur et d'humidité, pendant une période d'au moins 12 heures.

**11.** Procédé selon la revendication 10, caractérisé en ce que, après l'application, l'adhésif appliqué sur la surface de contact de la semelle d'usure est chauffé pendant 4 à 6 secondes à une température d'environ 85°C avant d'être durci dans des conditions atmosphériques ambiantes comme ci-dessus.

**12.** Procédé selon la revendication 10 ou 11, caractérisé en ce que, avant d'amener l'une contre l'autre les surfaces de contact, on chauffe la surface de la semelle d'usure jusqu'à une température ne dépassant pas 60°C.

**13.** Procédé selon la revendication 9, 10, 11 ou 12, caractérisé en ce que, après l'application de l'adhésif sur la surface de contact du fond de chaussure, on laisse la chaussure dans des conditions atmosphériques ambiantes pendant une période de 5 à 30 minutes avant de la placer dans ladite enceinte.

**14.** Procédé selon la revendication 9, caractérisé en ce que l'adhésif appliqué sur la surface de contact de la semelle d'usure est également durci dans une enceinte essentiellement fermée pendant une période de 2 ± 0,5 minutes.

**15.** Procédé selon la revendication 14, caractérisé en ce que, après l'application de l'adhésif comme ci-dessus, on laisse la chaussure et la semelle d'usure dans des conditions atmosphériques ambiantes pendant une période d'environ 10 minutes avant de les placer dans une enceinte essentiellement fermée comme ci-dessus.

**16.** Procédé selon la revendication 15, caractérisée en ce que l'adhésif appliqué sur la surface de contact de la semelle d'usure est refroidi pendant une période d'environ 30 secondes à la température ambiante, avant que les deux surfaces de contact soient amenées l'une contre l'autre comme ci-dessus.

**17.** Procédé selon l'une quelconque des revendications 9 à 16, caractérisé en ce que l'humidité dans ladite enceinte est de 52° à 54°C de point de rosée.

**18.** Procédé selon l'une quelconque des revendications 9 à 17, caractérisé en ce que le temps d'attente entre la fin de la période de durcissement de l'adhésif appliqué sur le fond de chaussure et la mise en contact des deux surfaces de contact est au plus de 45 secondes.

**Patentansprüche**

**1.** Verfahren zur Befestigung einer Sohle an einem Schuh, bei dem man einen feuchtigkeitshärtbaren Schmelzkleber entweder auf die Sohle und/oder das Schuhoberleder aufbringt, die Klebeschicht einem Heißhärtungsvorgang mit Luftfeuchtigkeit unterwirft sowie die Sohle und das Schuhoberleder mit dem Kleber dazwischen zusammenpreßt, dadurch gekennzeichnet, daß der Heißhärtungsvorgang unter kontrollierten Temperatur- und Feuchtigkeitsbedingungen und der Preßvorgang sofort, vorzugsweise in weniger als 90 Sekunden, nach dem Heißhärtungsvorgang erfolgt.

**2.** Verfahren nach Anspruch 1, wobei die Sohle und/oder das Schuhoberleder vor dem Aufbringen des feuchtigkeitshärtbaren Klebers einer Vorbehandlung unterzogen wird.

**3.** Verfahren nach Anspruch 1 oder 2, wobei kein feuchtigkeitshärtbarer Kleber auf die Sohle aufgebracht wird, welche stattdessen nur durch Wischen mit Lösungsmittel oder Grundierlösung vorbehandelt wird.

**4.** Verfahren nach einem der vorhergehenden Ansprüche, wobei die Pressung weniger als 60 Sekunden nach dem Austritt aus der Heißhärtung erfolgt.

**5.** Verfahren nach Anspruch 1 oder 2, wobei nur die Sohle oder das Schuhoberleder mit einer Beschichtung aus feuchtigkeitshärtbarem Kleber versehen und das unbeschichtete Schuhoberleder bzw. die Sohle einer kurzen Wärmebehandlung unterzogen wird.

**6.** Verfahren nach einem der Ansprüche 1, 2 oder 5, wobei man ein langsamhärtendes, feuchtigkeitshärtbares Polyurethan mindestens einen Tag vor Gebrauch auf die Sohle aufbringt und langsam bei Umgebungstemperatur und Feuchtigkeitsbedingungen härten läßt.

**7.** Verfahren nach Anspruch 6, wobei man die Härtung durch kurze Hitzeeinwirkung nach Aufbringen der Polyurethankleberzusammensetzung einleitet, mit nachfolgender langsamer Härtung unter Umgebungsbedingungen.

**8.** Verfahren nach Anspruch 6 oder 7, wobei man die Sohle vor dem Inberührungbringen mit dem Schuhoberleder erhitzt, um so das "Vornetzen" des Klebers zu verbessern, bevor die Berührungsflächen der Sohle und des Schuhoberleders zusammengebracht werden.

**9.** Verfahren nach Anspruch 1, unter Verwendung eines feuchtigkeitshärtbaren lösungsmittelfreien Klebers, wobei man stufenweise
   i) die Berührungsfläche der Laufsohle für das Aufbringen von Kleber vorbereitet und eine Schicht Kleber darauf aufbringt,
   ii) die Berührungsfläche der Schuhunterseite für das Aufbringen von Kleber vorbereitet und eine Schicht Kleber darauf aufbringt und
   iii) nach einer Wartezeit die beiden Berührungsflächen zusammenbringt und Druck darauf ausübt, damit sie verkleben,

dadurch gekennzeichnet, daß der aufgebrachte Kleber unter Bedingungen von Hitze und Feuchtigkeit gehärtet wird, wobei mindestens der auf die Berührungsfläche der Schuhunterseite aufgebrachte Kleber für einen Zeitraum von 2 ± 0,5 Minuten in einer im wesentlichen geschlossenen Kammer gehärtet wird, in welcher die Luft eine Temperatur von 95 ± 10°C und eine Feuchtigkeit von 40 bis 60°C Taupunkt aufweist,
und daß die Wartezeit zwischen dem Ende einer solchen Härtungszeit für den auf die Schuhunterseite aufgebrachten Kleber und dem Zusammenbringen der beiden Berührungsflächen nicht mehr als 60 Sekunden beträgt.

10. Verfahren nach Anspruch 9, dadurch gekennzeichnet, daß der auf die Berührungsfläche der Laufsohle aufgebrachte Kleber für einen Zeitraum von nicht weniger als 12 Stunden unter atmosphärischen Umgebungsbedingungen für Wärme und Feuchtigkeit gehärtet wird.

11. Verfahren nach Anspruch 10, dadurch gekennzeichnet, daß der auf die Berührungsfläche der Laufsohle aufgebrachte Kleber nach dem Aufbringen 4 bis 6 Sekunden lang auf eine Temperatur von etwa 85°C erhitzt wird, bevor er unter atmosphärischen Umgebungsbedingungen wie oben gehärtet wird.

12. Verfahren nach Anspruch 10 oder 11, dadurch gekennzeichnet, daß die Oberfläche der Laufsohle vor dem Zusammenbringen der Berührungsflächen auf eine 60°C nicht übersteigende Temperatur erhitzt wird.

13. Verfahren nach Anspruch 9, 10, 11 oder 12, dadurch gekennzeichnet, daß man nach dem Aufbringen von Kleber auf die Berührungsfläche der Schuhunterseite den Schuh für einen Zeitraum von 5 bis 30 Minuten unter atmosphärischen Umgebungsbedingungen beläßt, bevor er in besagte Kammer gestellt wird.

14. Verfahren nach Anspruch 9, dadurch gekennzeichnet, daß der auf die Berührungsfläche der Laufsohle aufgebrachte Kleber ebenfalls für einen Zeitraum von 2 ± 0,5 Minuten in einer im wesentlichen geschlossenen Kammer gehärtet wird.

15. Verfahren nach Anspruch 14, dadurch gekennzeichnet, daß man nach dem Aufbringen von Kleber wie oben den Schuh und die Laufsohle je für einen Zeitraum von etwa 10 Minuten unter atmosphärischen Umgebungsbedingungen beläßt, bevor sie wie oben in eine im wesentlichen geschlossene Kammer gestellt werden.

16. Verfahren nach Anspruch 15, dadurch gekennzeichnet, daß man den auf die Berührungsfläche der Laufsohle aufgebrachten Kleber für einen Zeitraum von etwa 30 Sekunden auf Raumtemperatur kühlt, bevor die beiden Berührungsflächen wie oben zusammengebracht werden.

17. Verfahren nach einem der Ansprüche 9 bis 16, dadurch gekennzeichnet, daß die Feuchtigkeit in besagter Kammer 52° bis 54°C Taupunkt beträgt.

18. Verfahren nach einem der Ansprüche 9 bis 17, dadurch gekennzeichnet, daß die Wartezeit zwischen dem Ende des Härtungszeitraums für den auf die Schuhunterseite aufgebrachten Kleber und dem Zusammenbringen der beiden Berührungsflächen bis zu 45 Sekunden beträgt.